Europäisches Patentamt

European Patent Office

Office européen des brevets

(19)

(11) Numéro de publication: **0 356 320**
**A2**

(12)

# DEMANDE DE BREVET EUROPEEN

(21) Numéro de dépôt: 89402298.7

(22) Date de dépôt: 17.08.89

(51) Int. Cl.⁵: **C 04 B 22/00**
C 04 B 26/02

(30) Priorité: 24.08.88 FR 8811174
16.12.88 FR 8816633

(43) Date de publication de la demande:
28.02.90 Bulletin 90/09

(84) Etats contractants désignés:
AT BE CH DE ES FR GB IT LI LU NL SE

(71) Demandeur: DAUSSAN ET COMPAGNIE
29-33 Route de Rombas
F-57140 Woippy (FR)

(72) Inventeur: Daussan, Jean-Charles
42 rue St Marcel
F-57000 Metz (FR)

Daussan, Gérard
32 rue du Fort
F-57050 Longeville-les-Metz (FR)

Daussan, André
52 rue des Pépinières
F-57050 Longeville-les-Metz (FR)

(74) Mandataire: Bouju, André
Cabinet Bouju 38 avenue de la Grande Armée
F-75017 Paris (FR)

(54) **Revêtement organique pour protéger les constructions, notamment contre le feu et la chaleur.**

(57) Le revêtement comprend une charge minérale en grains et/ou en fibres et au moins un composé inorganique apportant au revetement des molécules d'eau de cristallisation.

Cette charge est enrobée dans un liant organique.

Utilisation pour protéger les constructions, notamment contre le feu et la chaleur.

EP 0 356 320 A2

Description

**"Revêtement organique pour protéger les constructions, notamment contre le feu et la chaleur"**

La présente invention concerne un revêtement pour protéger les constructions, notamment contre le feu et la chaleur.

Le mot revêtement est désigné ci-après sous son sens strict en excluant les peintures intumescentes qui ne présentent pas de stabilité dans le temps.

Par "constructions", on désignera ci-après principalement les murs, plafonds, toitures, portes et charpentes des immeubles d'habitation ou des locaux industriels ou agricoles, les garages, hangars, réalisés en poutrelles, poutres et poteaux métalliques ou en bois, fermes pleines ou ajourées ou en treillis, les cloisons, les panneaux en matière plastique, en tôle émaillée ou peinte, en matériaux expansés ainsi que les faux plafonds et leurs profilés de suspension, les boucliers pare-feu, les gaines d'aération, les conduits de fumée et d'incendie, les canalisations de transport, en particulier de produits pétroliers et matières inflammables analogues, et leur jointoiement, les chemins de câbles électriques, les passages de câbles électriques, les coffres forts, les panneaux d'isolation acoustique et/ou thermique, les tuyaux, et les installations sanitaires.

Par "constructions", on désignera également dans la description ci-après, les structures flottantes telles que les navires, ainsi que les réservoirs de stockage de produits inflammables, comme les produits pétroliers et chimiques, les carcasses de turbines hydrauliques ou atomiques, les réacteurs atomiques et analogues.

Pour protéger les constructions précitées contre les effets du feu et de la chaleur, on a déjà utilisé couramment des produits à base d'amiante, de fibres céramiques, de laine de roche ou de verre, et/ou de particules minérales, éventuellement enrobées dans un liant inorganique ou organique.

On connait ainsi, par exemple, un produit anti-feu, utilisé notamment pour la protection de câbles électriques, comprenant un liant organique, à base de matières synthétiques telles que : nylon, copolymère butadiène styrène, polyvinyles, et une charge de particules minérales à base de carbonate de calcium, talc (silicate de magnésium), mica, silice très fine, argile (kaolin), éventuellement cellulose (telle que pâte à papier).

Ce produit anti-feu donne une protection contre le feu extrèmement précaire, de l'ordre d'un quart d'heure environ. La protection de la plupart des câbles électriques ne brûle pas tant que la température n'atteint pas 300°C. Toutefois, en cas de feu prolongé et/ou de contact direct avec les flammes, la protection apportée est à peu près nulle. En effet, l'homme du métier sait que les polyvinyles se décomposent et/ou brûlent à des températures relativement basses, inférieures à 300°C, si bien que le revêtement perd sa consistance et n'assure plus aucune protection dès que cette température est atteinte.

On connaît par ailleurs, d'après le brevet européen n° 0 029 883 au nom de la demanderesse un revêtement pour protéger les constructions notamment contre le feu et la chaleur, comprenant des particules réfractaires enrobées dans un liant inorganique durcissable en présence d'eau, et au moins un composé inorganique apportant au revêtement ou formant lors de la prise du liant inorganique un nombre de molécules d'eau de cristallisation supérieur à celui obtenu normalement par le liant seul.

L'expérience a montré que l'on pouvait ainsi, par la présence d'un tel composé inorganique apportant des molécules d'eau de cristallisation, augmenter considérablement la protection contre le feu obtenue par le revêtement.

Toutefois, un tel revêtement est relativement onéreux et peut présenter des difficultés d'adhérence, tant au moment de son application qu'après celle-ci, sur certaines parois lisses verticales ou en surplomb telles que des parois de gaines de ventilation ou de conduits de fumée, qui sont en général métalliques.

La présente invention a pour but de remédier aux inconvénients des revêtements connus, et de proposer un revêtement de protection qui soit peu onéreux, qui présente une adhérence excellente même sur des parois lisses verticales ou en surplomb, qui soit d'utilisation facile et qui donne une excellente protection contre un feu prolongé ou contre un contact direct avec les flammes.

Le revêtement pour protéger les constructions, notamment contre le feu et la chaleur, visé par l'invention comprend une charge minérale en grains et/ou en fibres et au moins un composé inorganique apportant au revêtement des molécules d'eau de cristallisation.

Suivant l'invention, le revêtement est caractérisé en ce que cette charge est enrobée dans un liant organique.

Le revêtement conforme à l'invention diffère donc du brevet européen n° 0029883 précité au nom de la demanderesse en ce qu'il comprend un liant organique en lieu et place d'un liant inorganique durcissable en présence d'eau, lequel est en général un liant hydraulique, ciment, chaux vive, etc... Une telle substitution paraît particulièrement audacieuse s'agissant d'un revêtement de protection contre le feu et la chaleur quand on connaît le caractère très inflammable et très combustible des liants organiques.

Bien que les liants organiques se décomposent et/ou brûlent à une température souvent inférieure à 300°C, ce qui dissuade fortement l'homme du métier d'utiliser un liant organique dans un revêtement destiné à assurer une protection durable contre le feu et la chaleur, l'expérience a montré ce résultat surprenant que l'on pouvait ainsi augmenter considérablement la protection contre le feu obtenue par le revêtement.

La demanderesse a constaté que, comme le revêtememt objet du brevet européen précité, le revêtement suivant la présente invention, lorsqu' il était exposé à la chaleur ou au feu, montait beaucoup moins vite en température que les revêtements connus, la vitesse moyenne de montée en température étant d'autant plus réduite que le nombre de molécules d'eau de cristallisation contenues dans ce revêtement était plus important.

Sans que l'invention soit liée à cette explication, la demanderesse pense que cette propriété résulte du fait que la libération de l'eau de cristallisation nécessite un apport de chaleur important qui a pour effet de maintenir la température du revêtement à une température basse comprise entre environ 80 et 200°C tant que l'eau de cristallisation n'a pas été libérée : la décomposition ou la combustion du liant organique se trouvent ainsi empêchées, de sorte que le revêtement selon l'invention assure une excellente protection contre le feu et la chaleur.

Le liant organique, qui est un produit peu onéreux, permet de réaliser un revêtement peu onéreux ayant une excellente adhérence, même sur des parois lisses telles que des parois métalliques, verticales ou en surplomb, sans aucune sujétion d'emploi du type de celles liées aux phénomènes de prise hydraulique, et sans l'obligation d'un préencollage de la paroi avant la mise en place du revêtement.

L'absence de tels phénomènes de prise hydraulique fait qu'il n'y a pas à craindre l'apparition de fissures.

Selon une première version de l'invention, la charge minérale en grains et/ou en fibres comprend des matériaux tels que silicates ou phosphates d'aluminium, de calcium, de magnésium ou leurs composés, par exemple, craie, talc, argile, kaolin, mica, silice, silice colloïdale, alumine, wollastonite, perlite, vermiculite, produits silico-alumineux ou silico-magnésiens, magnésie, etc, ou leurs mélanges.

Cette charge comprend donc des matériaux très courants et peu onéreux, faciles à manipuler et à utiliser. Selon une version avantageuse de l'invention, le liant organique comprend au moins un composé organique soluble dans l'eau ou susceptible de former une dispersion dans l'eau. Ce composé peut être choisi parmi les homopolymères et copolymères de butadiène et/ou de styrène et/ou de l'acétate de vinyle et/ou des esters de l'acide acrylique, le nylon, le latex, les colles vinyliques ou phénoliques, les colles à base durée, les colles urée-formol ou phénol-formol, les systèmes époxydiques ou polyuréthanes et les mélanges de ces composés.

L'utilisation de tels composés organiques solubles dans l'eau ou susceptibles de former des dispersions dans l'eau rend très faciles les opérations de préparation et d'application du revêtement. Ce dernier peut être ainsi préparé et livré en boîte fermée sous forme d'un mélange prêt à l'emploi contenant un excès d'eau. En variante, le revêtement peut être préparé et livré sous forme d'un mélange sec destiné à être mélangé à de l'eau avant utilisation, ce qui permet par exemple de le projeter par voie pneumatique.

Selon une version avantageuse de l'invention, le composé inorganique apportant au revêtement des molécules d'eau de cristallisation comprend au moins un composé choisi parmi, la soude caustique hydratée, le carbonate de sodium déca-hydraté (Na$_2$

CO$_3$ .10H$_2$ 0), le carbonate de magnésium trihydraté (Mg CO$_3$.3H$_2$ 0) , le sulfate d'aluminium et de potassium dodécahydraté (AlK(SO$_4$)$_2$.12H$_2$ 0), le sulfate d'aluminium et d'ammonium dodécahydraté (AlNH$_4$ (SO$_4$)$_2$.12H$_2$O) , le sulfate d'aluminium et de sodium dodécahydraté (AlNa(SO$_4$)$_2$.12H$_2$O), le sulfate de magnésium heptahydraté (MgSO$_4$.7H$_2$O), les aluns hydratés, en particulier de potassium et d'ammonium, le phosphate trisodique dodécahydraté (Na$_3$PO$_4$.12H$_2$O), les phosphates alcalins et alcalino-terreux hydratés, le silicate de sodium pentahydraté (Na$_2$SiO$_3$.5H$_2$O), le métasilicate de sodium, le tétraborate de sodium décahydraté (Na$_2$B$_4$O$_7$.10H$_2$O),et leurs mélanges.

Ces composés peuvent être très facilement approvisionnés et utilisés, ne risquent pas d'alourdir le coût de préparation et de mise en place du revêtement conforme à l'invention.

Selon une première version préférée de l'invention, le revêtement conforme à l'invention a la composition pondérale suivante à l'état sec :
- liant organique : environ 20 à 98%,
- charge minérale en grains et/ou en fibres et retardateurs de flamme : environ 0 à 50 %,
- composés inorganiques apportant des molécules d'eau de cristallisation : environ 2 à 80 %
- autres constituants, pâte à papier, et/ou cellulose, tensio-actifs : environ 0 à 20 %.

Selon une autre version préférée de l'invention, le revêtement conforme à l'invention a la composition pondérale suivante, à l'état sec :
- liant organique : environ 0,5 % à 20 %,
- charge minérale en grains et/ou en fibres, et retardateurs de flamme : plus de 50 %,
- composés inorganiques apportant des molécules d'eau de cristallisation : environ 2 à 30 %,
- autres constituants : pâte à papier, et/ou cellulose, tensio-actifs environ 0 à 20 %.

Selon une autre version préférée de l'invention, le revêtement se présente sous forme de panneaux isolants comprenant essentiellement des fibres minérales, par exemple sous forme de laine de basalte, laine de roche, de verre ou de scorie, laine céramique ou leurs mélanges, enrobées dans un liant organique qui assure la liaison entre les fibres, et un composé inorganique apportant des molécules d'eau de cristallisation, et le composé inorganique apportant des molécules d'eau de cristallisation est réparti régulièrement dans l'épaisseur des panneaux.

D'autres particularités et avantages de l'invention apparaîtront encore dans la description ci-après.

Suivant l'invention, le revêtement pour protéger les constructions, notamment contre le feu et la chaleur, comprend une charge minérale en grains et/ou en fibres enrobée dans un liant organique. Il comprend en outre au moins un composé inorganique apportant au revêtement des molécules d'eau de cristallisation.

La charge minérale en grains et/ou en fibres comprend, par exemple, des matériaux tels que craie, talc, argile, kaolin, mica, silice, silice colloïdale, alumine, wollastonite, perlite, vermiculite, composés silico-alumineux ou silico-magnésiens, magnésie, etc, ou leurs mélanges. Cette charge peut évidemment comprendre également d'autres matériaux utilisés communément dans les revêtements de protection, comme par exemple de l'amiante, des fibres inorganiques, des fondants tels que spath fluor, borate de calcium, oxyde de fer.

Le liant organique comprend au moins un composé organique soluble dans l'eau ou susceptible de former une dispersion dans l'eau. Ce composé peut être choisi par exemple parmi les homopolymères et copolymères de butadiène et/ou de styrène et/ou de l'acétate de vinyle et/ou des esters de l'acide acrylique, le latex, le nylon, les colles vinyliques ou phénoliques, les colles à base d'urée, les colles urée-formol ou phénol-formol, les systèmes époxydiques ou polyuréthanes et les mélanges de ces composés.

Il peut comprendre ainsi par exemple des nylons, des copolymères de butadiène et/ou de styrène et/ou de l'acétate de vinyle avec un ester du maléate de dibutyle ou un ester de l'acide versatique ou un ester de l'acide acrylique ou l'éthylène ou l'éthylène et le chlorure de vinyle, ou des copolymères d'un ester de l'acide acrylique avec un autre ester de cet acide ou avec le styrène, tous ces composés étant susceptibles de former des dispersions avec l'eau, telles que les dispersions pour peintures et revêtements destinés au bâtiment, commercialisées en France sous la marque commerciale déposée MOWILITH par la Société française HOECHST. Il peut faire partie des systèmes époxydiques ou polyuréthanes et leurs mélanges.

Le composé inorganique apportant au revêtement des molécules d'eau de cristallisation comprend au moins un composé choisi parmi la soude caustique hydratée, le carbonate de sodium ($Na_2CO_3.10H_2O$), le carbonate de magnésium trihydraté ($MgCO_3.3H_2O$), le sulfate d'aluminium et de potassium dodécahydraté ($AlK(So_4)_2.12H_2O$), le sulfate d'aluminium et d'ammonium dodécahydraté ($AlNH_4(SO_4)_2.12H_2O$), le sulfate d'aluminium et de sodium dodécahydraté ($AlNa(SO_4)_2.12H_2O$), le sulfate d'aluminium octodécahydraté ($Al_2(SO_4)_3\ 18H_2O$), le sulfate de magnésium heptahydraté ($MgSO_4.7H_2O$), les aluns hydratés, en particulier de potassium et d'ammonium, le phosphate trisodique dodécahydraté ($Na_3PO_4.12H_2O$), les phosphates alcalins et alcalino-terreux hydratés, le silicate de sodium pentahydraté ($Na_2SIO_3.5H_2O$), le métasilicate de sodium, le tétraborate de sodium décahydraté ($Na_2B_4O_7.10H_2O$) et leurs mélanges.

Tous ces composés sont facilement disponibles et utilisables, et se décomposent en libérant leur eau de cristallisation à des températures au plus égales à 200°C environ.

On sait ainsi que le phosphate trisodique hydraté contient plus de 54 % en poids d'eau, et libère celle-ci aux environs de 70°C.

Il est également possible de prévoir, en plus des composés hydratés du groupe précédent, des composéss hydratés qui se décomposent à des températures nettement supérieures, tels que l'alumine hydratée ($Al_2O_3.3H_2O$) ou le nitrate de magnésium hexahydraté ($Mg(NO_3)_2.6H_2O$), par exemple.

Le revêtement peut également, de manière connue, comprendre en outre au moins un composé dit retardateur de flamme tel que l'oxyde d'antimoine, l'oxyde de bore ou le chlorure d'ammonium, dont l'action n'a pas besoin d'être décrite ici.

Le revêtement peut également comprendre d'autres matériaux ou composés habituellement employés pour faciliter la préparation ou l'application du mélange ou améliorer son comportement au feu ou à la chaleur, tels que pâte à papier, cellulose, amidon, blanose, dextrine, produits tensio-actifs, etc, dont l'effet est connu et n'a pas besoin d'être décrit ici.

Une première composition pondérale préférée du revêtement conforme à l'invention est la suivante, à l'état sec :
liant organique : environ 20 à 98 %
charge minérale en grains et/ou en fibres et retardateurs de flamme: environ 0 à 50 %
composés inorganiques apportant des molécules d'eau de cristallisation :
environ 2 à 80 %
autres constituants, pâte à papier et/ou cellulose, tensio-actifs, etc : environ 0 à 20 %.

Une autre composition pondérale préférée du revêtement conforme à l'invention est la suivante, à l'état sec :
- liant organique : environ 0,5 à 20 %.
- charge minérale en grains et/ou en fibres, et retardateurs de flamme : plus de 50 %
- composés inorganiques apportant des molécules d'eau de cristallisation : environ 2 à 30%,
- autres constituants : pâte à papier, et/ou cellulose, tensio-actifs : environ 0 à 20 %.

Le fait d'utiliser comme liant un composé soluble dans l'eau ou susceptible de former une dispersion dans l'eau permet une utilisation très facile du revêtement conforme à l'invention correspondant à l'une ou l'autre de ces deux compositions pondérales préférées.

Ce revêtemet peut ainsi être fourni sous forme d'un mélange prêt à l'emploi, contenant un excès d'eau et disponible en boîtes ou conteneurs fermés. L'application peut se faire manuellement, ou par projection mécanique ou pneumatique.

Le revêtement peut également être fourni sous forme d'un mélange sec susceptible d'être facilement projeté, par exemple par voie pneumatique, après humidification à un taux d'humidité convenable.

Selon une autre variante de l'invention, le revêtement se présente sous forme de panneaux isolants comprenant essentiellement fibres minérales, par exemple sous forme de laine de basalte, laine de roche, de verre ou de scorie, laine céramique ou leurs mélanges, enrobées dans un liant organique qui assure la liaison entre les fibres, et un composé inorganique apportant des molécules d'eau de cristallisation.

Dans un premier mode de réalisation, le composé inorganique apportant des molécules d'eau de cristallisation est réparti régulièrement dans l'épaisseur des panneaux, qui sont des panneaux du commerce, par exemple des panneaux isolants en laine de basalte fabriqués et commercialisés sous la marque ISOVER avec une épaisseur habituelle comprise entre 40 et 100 mm.

La demanderesse a ainsi réalisé l'essai suivant : elle a constaté qu'un échantillon, ayant un volume de 1 dm3 et pesant environ 110g, d'un tel panneau est capable d'absorber environ 730g d'eau ou d'un liquide comparable. La demanderesse a pris un échantillon de 50g d'un tel panneau et lui a fait absorber, à la manière d'une éponge,ou par aspiration et/ou pression,350g d'une solution aqueuse de phosphate trisodique préparée en dissolvant 50g de phosphate trisodique cristallisé dans un litre d'eau. Il y a donc environ 17,5g de phosphate dans les 350g de solution absorbés par l'échantillon de panneau, qui pèse donc, après un séchage en étuve à 45°C pour éliminer l'eau de la solution, 50 + 17,5 = 67,5g, et qui contient ainsi 17,5/67,5 = 25,9 % en poids de phosphate trisodique cristallisé. Ce dernier contenant 54,6 % en poids d'eau de cristallisation, l'échantillon de panneau comprend donc 25,9 x 54,6 = 14,14 % en poids d'eau de cristallisation uniformément répartie. La densité de l'échantillon de panneau, qui était d'environ 0, 11 avant l'essai, est passée à 0,16 environ après séchage, ce qui prouve que l'échantillon de panneau a pratiquement conservé ses propriétés d'isolation thermique (et phonique) initiales.

La demanderesse a constaté que l'échantillon de panneau ainsi préparé a une tenue au feu améliorée d'au moins 30 % par rapport à celle du panneau initiale, cette tenue au feu étant mesurée par exemple par le temps nécessaire pour que, lors d'une exposition du panneau à une source de chaleur, la température derrière le panneau atteigne une valeur prédéterminée.

Pour éviter l'efflorescence superficielle du phosphate trisodique due à la migration de celui-ci vers la surface avec l'eau de solution lors du séchage, il est avantageux d'ajouter dans la solution un réactif destiné à faire précipiter le phosphate dans la masse de l'échantillon de panneau, par exemple du latex, du silicate,de l'acide borique, du métaphosphate de sodium, etc...

Les résultats ci-dessus sont bien entendu fonction de la porosité ouverte de la nappe de fibres, donc de la nature des fibres, de la nature du liant, de la compacité de la nappe, ainsi que de la nature du composé apportant des molécules d'eau de cristallisation.

Dans un autre mode de réalisation, un panneau du commerce est revêtu sur au moins l'une de ses faces principales d'un enduit contenant au moins un composé inorganique apportant des molécules d'eau de cristallisation et un liant organique.

Un panneau, tel qu'un panneau ISOVER du commerce, peut ainsi être revêtu d'une couche de quelques millimètres d'épaisseur d'un enduit comprenant par exemple 60 % environ en poids d'acétate de polyvinyle, 30 % environ en poids de charge minérale, en grains et/ou en fibres, et de retardateur de flamme, 10 % environ en poids d'un composé apportant des molécules d'eau de cristallisation, tel que du phosphate trisodique cristallisé.

Il est bien entendu possible de prévoir un tel enduit sur les deux faces d'un même panneau du commerce,ou un tel enduit pris en sandwich entre deux panneaux du commerce, ou de combiner d'une manière quelconque des panneaux imprégnés d'un composé apportant des molécules d'eau de cristallisation, des panneaux ordinaires du commerce et une ou plusieurs couches d'un enduit du type ci-dessus.

Une personne qualifiée dans ce domaine comprendra qu'il est facile d'adapter le revêtement conforme à l'invention à la nature du support sur lequel il doit être appliqué, mais également aux conditions locales climatiques et/ou physiques ou chimiques auxquelles il sera soumis.

Ainsi, la nature du liant sera différente suivant que le revêtement sera mis en place sur une paroi en béton, une paroi métallique, des parties en matière plastique (gaînes de câbles électriques, tuyauteries), etc.

De même, dans une zone ou enceinte chaude et humide, on peut prévoir d'incorporer dans le revêtement un fongicide pour empêcher le développement de champignons.

Si l'on veut un revêtement qui reste longtemps souple, on peut utiliser comme liant du latex qui ne polymérise pas tant qu'il comporte de l'eau.

Lorsque de tels revêtements sont exposés à la chaleur ou au feu, ils se comportent de la façon suivante :
la température de ces revêtements, mesurée au sein de ces derniers, au lieu de croître suivant une courbe continuellement croissante comme on pouvait s'y attendre, reste constante pendant une durée atteignant généralement plusieurs heures à une température comprise environ entre 80 et 200°C. Ce résultat confère aux revêtements conformes à l'invention des propriétés anti-feu et anti-chaleur extrêmement avantageuses.

Le palier de température précité ne peut nullement s'expliquer par l'isolation thermique apportée par les constituants du revêtement. Selon l'avis de la demanderesse, ce palier de température s'explique par la présence au sein du revêtement d'une quantité appréciable d'eau de cristallisation.

En effet, la libération de cette eau de cristallisation nécessite un apport calorifique correspondant à l'énergie de liaison des molécules d'eau, et 540 kcal. par kg pour transformer cette eau libre en vapeur. De plus, l'eau libérée sous forme de vapeur humidifie l'atmosphère ce qui est favorable à l'extinction de l'incendie.

Le palier de température à laquelle s'effectue cette libération d'eau subsiste jusqu'à ce que toute l'eau de cristallisation ait été vaporisée. La durée de ce palier est de ce fait proportionnelle à la proportion d'eau de cristallisation du revêtement.

Bien entendu, l'invention n'est pas limitée aux exemples de réalisation décrits ci-dessus, et l'on peut apporter à ceux-ci de nombreux changements et modifications sans soir du domaine de l'invention.

Ainsi, il est possible d'incorporer au revêtement conforme à l'invention un liant minéral, tel que du ciment, un liant phosphatique, du silicate, de l'argile et leurs mélanges en plus du liant organique, pour augmenter la résistance mécanique de ce revêtement.

On a de même décrit l'emploi comme liant de composés organiques solubles dans l'eau ou susceptibles de former une dispersion dans l'eau. Il est possible de remplacer l'eau par un autre liquide dès lors que l'on obtient un revêtement prêt à l'emploi dont les caractéristiques conviennent ou sont acceptables pour les conditions d'application et d'utilisation prévues.

Dans le cas des revêtements façonnables, on peut également projeter ou façonner ceux-ci dans des moules afin d'obtenir des éléments préfabriqués ayant la forme requise et que l'on démoulera après prise et/ou séchage.

Dans le cas des revêtements se présentant sous forme de panneaux, le composé inorganique apportant des molécules d'eau de cristallisation peut être ajouté après la fabrication du panneau, par exemple de la manière décrite ci-dessus, ou au cours de la fabrication du panneau sous forme de grains ou sous forme d'une solution plus ou moins concentrée.

**Revendications**

1. Revêtement pour protéger les constructions, notamment contre le feu et la chaleur, comprenant une charge minérale en grains et/ou en fibres et au moins un composé inorganique apportant au revêtement des molécules d'eau de cristallisation, caractérisé en ce que cette charge est enrobée dans un liant organique.

2. Revêtement conforme à la revendication 1, caractérisé en ce que la charge minérale en grains et/ou en fibres comprend des matériaux tels que silicates ou phosphates d'aluminium, de calcium, de magnésium ou leurs composés, par exemple, craie, talc, argile, kaolin, mica, silice, silice colloïdale, alumine, wollastonite, perlite, vermiculite, composés silico-alumineux ou silico-magnésiens, magnésie, et leurs mélanges.

3. Revêtement conforme à l'une des revendications 1 ou 2, caractérisé en ce que le liant organique comprend au moins un composé organique soluble dans l'eau ou susceptible de former une dispersion dans l'eau.

4. Revêtement conforme à la revendication 3, caractérisé en ce que ledit composé organique est choisi parmi les homopolymères et copolymères de butadiène et/ou de styrène et/ou de l'acétate de vinyle et/ou des esters de l'acide acrylique, le nylon, le latex, les colles vinyliques ou phénoliques, les colles à base durée, les colles urée-formol ou phénol-formol, les systèmes époxydiques ou polyuréthanes et leurs mélanges.

5. Revêtement conforme à l'une des revendications 1 à 4, caractérisé en ce que le composé inorganique apportant au revêtement des molécules d'eau de cristallisation comprend au moins un composé choisi parmi la soude caustique hydratée, le carbonate de sodium décahydraté ($Na_2CO_3.10H_2O$), le carbonate de magnésium trihydraté (Mg

$CO_3.3H_2O$), le sulfate d'aluminium et de potassium dodécahydraté (AIK $(SO_4)_2$ .12$H_2O$), le sulfate d'aluminium octodécahydraté ($Al_2$ $(SO_4)_3$ 18H $_2O$), le sulfate de magnésium heptahydraté ($MgSO_4$. 7$H_2O$), les aluns hydratés, en particulier de potassium et d'ammonium, le phosphate trisodique dodécahydraté ($Na_3.PO_4.12H_2O$) les phosphates alcalins et alcalino-terreux hydratés, le silicate de sodium pentahydraté (Nas $SiO_3$ .5$H_2O$), le métasilicate de sodium, le tétraborate de sodium décahydraté ($Na_2BO_7.10H_2O$), et leurs mélanges.

6. Revêtement conforme à l'une des revendications 1 à 5, caractérisé en ce qu'il comprend au moins un composé retardateur de flamme tel que l'oxyde d'antimoine, l'oxyde de bore ou le chlorure d'ammonium.

7. Revêtement conforme à l'une des revendications 1 à 6 caractérisé en ce qu'il comporte un liant inorganique tel que du ciment, un liant phosphatique, du silicate, de l'argile et leurs mélanges.

8. Revêtement conforme à l'une des revendications 1 à 7, caractérisé en ce qu'il comporte d'autres produits tels que de la pâte à papier, de la cellulose, de la blanose, de la dextrine, de l'amidon et leurs mélanges.

9. Revêtement conforme à l'une des revendications 1 à 8, caractérisé en ce qu'il a la composition pondérale suivante, à l'état sec :
- liant organique : environ 20 à 98%
- charge minérale en grains et/ou en fibres et retardateurs de flamme : environ 0 à 50 %
- composés inorganiques apportant des molécules d'eau de cristallisation : environ 2 à 80 %
- autres constituants, pâte à papier et/ou cellulose, tensio-actifs : environ 0 à 20 %.

10. Revêtement conforme à l'une des revendications 1 à 8, caractérisé en ce qu'il a la composition pondérale suivante, à l'état sec :
- liant organique : environ 0,5 % à 20 %,
- charge minérale en grains et/ou en fibres, et retardateurs de flamme : plus de 50 %,
- composés inorganiques apportant des molécules d'eau de cristallisation : environ 2 à 30 %,
- autres constituants : pâte à papier, et/ou cellulose, tensio-actifs : environ 0 à 20 %.

11. Revêtement conforme à l'une des revendications 1 à 8, caractérisé en ce qu'il se présente sous forme de panneaux isolants comprenant essentiellement des fibres minérales, par exemple sous forme de laine de basalte, laine de roche, de verre ou de scorie, laine céramique ou leurs mélanges, enrobées dans un liant organique qui assure la liaison entre les fibres, et un composé inorganique apportant des molécules d'eau de cristallisation.

12. Revêtement conforme à la revendication 11, caractérisé en ce que le composé inorganique apportant des molécules d'eau de cristallisation, est réparti régulièrement dans l'épaisseur des panneaux.

13. Revêtement conforme à l'une des revendications 11 ou 12, caractérisé en ce que chaque panneau est revêtu, sur au moins l'une de ses faces principales, d'un enduit contenant au moins un composé inorganique apportant des molécules d'eau de cristallisation et un liant organique.